Europäisches Patentamt

European Patent Office

Office européen des brevets

(19)

(11) Numéro de publication: **0 138 723**
**B1**

(12) **FASCICULE DE BREVET EUROPEEN**

(45) Date de publication du fascicule du brevet: **18.05.88**

(51) Int. Cl.⁴: **H 01 R 4/24, A 01 K 11/00**

(21) Numéro de dépôt: **84420155.8**

(22) Date de dépôt: **18.09.84**

(54) **Dispositif de connexion électrique automatique pour le branchement rapide et fugitif de circuits électroniques.**

(30) Priorité: **23.09.83 FR 8315466**

(43) Date de publication de la demande:
**24.04.85 Bulletin 85/17**

(45) Mention de la délivrance du brevet:
**18.05.88 Bulletin 88/20**

(84) Etats contractants désignés:
**AT BE CH DE GB IT LI LU NL SE**

(56) Documents cités:
**EP-A-0 077 707**
**CH-A- 460 106**

(73) Titulaire: **SOCIETE NOUVELLE ROCKALL FRANCE S.A.**
**Route de Beauvais**
**F-35500 Vitre (FR)**

(72) Inventeur: **Biggio, Alain**
**35 Route de la Garde**
**F-69760 Limonest (FR)**
Inventeur: **Landrevie, Jacques**
**Saint-Martin Sur La Chambre**
**F-73130 La Chambre (FR)**

(74) Mandataire: **Bressand, Georges et al**
**c/o CABINET LAVOIX 2 Place d'Estienne d'Orves**
**F-75441 Paris Cedex 09 (FR)**

EP 0 138 723 B1

Courier Press, Leamington Spa, England.

La présente invention est relative à un dispositif de connexion électrique automatique susceptible d'être utilisé pour effectuer le branchement rapide et fugitif de circuits électroniques.

Il est connu d'assurer le branchement entre eux de plusieurs circuits électroniques, en utilisant des connecteurs définissant des broches mâles et des douilles femelles.

La manoeuvre de ce type de connecteur s'effectue à la main. Elle est relativement lente, et elle suppose qu'on puisse aligner convenablement les deux prises du connecteur avant de les enficher l'une dans l'autre. Ce type de système est donc d'un emploi difficile, voire impossible pour certaines applications. Le problème se pose de façon particulièrement cruciale, lorsque l'un des deux éléments est mobile.

Ainsi par exemple, on connait d'après le document EP—A—77 707, une étiquette d'identification d'object comprenant d'une part une face de contact et d'autre part un palpeur. La face de contact comporte plusieurs zones conductrices isolées les unes par rapport aux autres et le palpeur comporte des pointes en matière conductrice.

Par ailleurs, on connaît également d'après le document CH—A—460 016, une pince de contact comprenant un organe pointu métallique à structure télescopique que des moyens élastiques de rappel tendent à rappeler vers l'extérieur.

La présente invention a pour but d'éviter les inconvénients des dispositifs de l'état de la technique, en réalisant un système de connexion électrique automatique et rapide, convenant aux applications les plus diverses, et permettant d'obtenir un alignement correct des éléments de ce dispositif, de manière fiable, rapide et simple.

A cet effet, l'invention a pour objet un dispositif de connexion automatique rapide comprenant d'une part une face de contact, d'autre part, un palpeur, la face de contact comportant plusieurs zones conductrices isolées les unes par rapport aux autres, tandis que le palpeur comporte des pointes, en matière conductrice, qu'il suffit d'appliquer contre les zones conductrices de la face de contact. caractérisé en ce que la face de contact est équipée de moyens destinés à assurer automatiquement le postionnement angulaire du palpeur lorsqu'on l'y applique, et en ce que les zones conductrices de la face de contact sont réparties en cercle ou en secteurs circulaires autour d'un axe géométrique central, tandis que les moyens de positionnement angulaire sont constitués par une couronne, munie d'une denture sue laquelle commence à venir s'encastrer une denture complémentaire prévue sur le palpeur, et ceci avant que les pointes du palpeur ne viennent s'appliquer sur les zones conductrices de la face de contact, si bien que l'orientation angulaire du palpeur par rapport à la face de contact est définie seulement à une dent près, ce qui peut s'effectuer automatiquement sans que l'utilisateur ait à tâtonner plus ou moins longtemps.

Suivant d'autres caractérisetiques:

— les dents des couronnes mâles et femelles ont une entrée en biseau, du fait de la forme tronconique des couronnes dentées;

— les zones conductrices de la face de contact sont revêtues par une membrane d'un matériau isolant souple et perforable, qui assure leur protection, tandis que les pointes du palpeur sont suffisamment pointues pour percer cette membrane à chaque opération;

— les zones conductrices de la face de contact sont reliées à une mémoire avec laquelle elles sont enrobées dans un support isolant;

— les pointes en matière conductrice du palpeur sont reliées à un appareil comportant des circuits électroniques adaptés pour que, aussitôt après la mise en contact des pointes, avec les zones conductrices de la face de contact, se déroule une première séquence pendant laquelle un circuit de mesure d'impédance à bas niveau assure l'exploration des différentes zones conductrices pour définir à laquelle des pointes du palpeur chacune d'elles est reliée, alors qu'aussitôt après cette phase préliminaire, se déroule la séquence opératoire proprement dite, qui lit, explore, ou modifie le contenu de la mémoire.

Le dessin annexé, donné à titre d'exemple non limitatif, permettre de mieux comprendre les caractéristiques de l'invention.

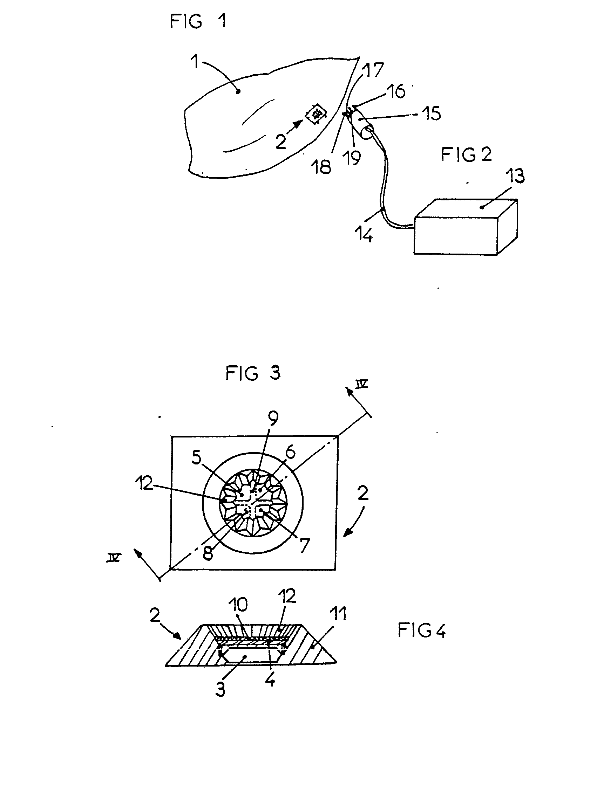

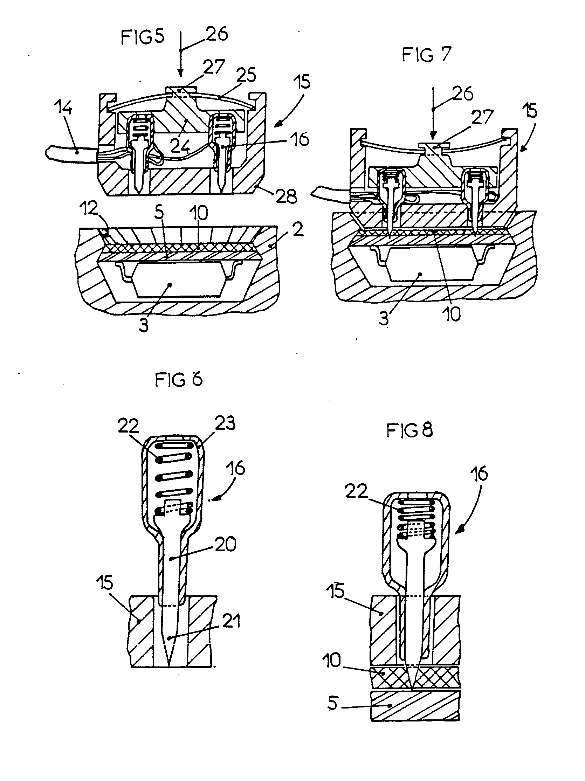

Figure 1 montre une mémoire selon l'invention 5 agrafée sur l'oreille d'un animal d'élevage.

Figure 2 montre le poste d'exploration et de lecture qu'utilise l'opérateur.

Figure 3 est une vue de dessus montrant à grande échelle le détail de la mémoire.

Figure 4 est une coupe suivant IV—IV (figure 3).

Figure 5 est une coupe axiale montrant le palpeur selon l'invention lorsqu'on s'apprête à le présenter sur la mémoire.

Figure 6 montre à grande échelle le détail d'une des pointes rétractables de la figure 5.

Figure 7 est une coupe analogue à la figure 5 montranta le palpeur adapté sur la mémoire.

Figure 8 est une vue correspondante montrant le détail d'une des pointes de contact.

Figure 9 est un schéma bloc illustrant le montage du circuit électronique de connexion automatique.

Figure 10 est le scéma électronique de l'étage utilisé pour explorer la position angulaire des pointes de contact par rapport aux secteurs conducteurs de la mémoire.

Dans l'exemple illustré, on a fixé sur l'oreille 1 d'un animal d'élevage, une pastille électronique 2 selon l'invention. Cette pastille comprend une mémoire 3 soudée sur une face d'une plaque conductrice 4, dont la face opposée est partagée en plusieurs secteurs conducteurs, par exemple au nombre quatre, référencés 5, 6, 7, 8 (figure 3). Ces secteurs sont séparés par des joints de matières isolantes 9. Enfin, l'ensemble de la surface conductrice 5, 6, 7, 8 est revêtu par une pellicule 10 en un élastomère souple qui est à la fois isolant et autocicatrisant. L'ensemble du dispositif est enrobé dans la résine d'un socle isolant 11, définissant autour et au-dessus de la surface réceptrice 5, 6, 7, 8a, une courrone dentée 12 qui est évasée vers l'extérieur 6, 7, 8, une couronne dentée 12 qui est évasée vers l'extérieur. Autrement dit, chacune des dents de la couronne 12 présente une entrée en biseau, si on la considère depuis l'extérieur.

Pour lire la pastille 2, l'invention prévoit par ailleurs l'utilisation d'un boîtier électronique portatif 13, qu'un câble souple 14 relie à un palpeur 15. Ce palpeur possède des pointes conductrices rétractables en nombre égal à celui des secteurs conducteurs 5, 6, 7, 8. Autrement dit, dans l'exemple choisi, les pointes conductrices sont au nombre de quatre, références 16, 17, 18, 19.

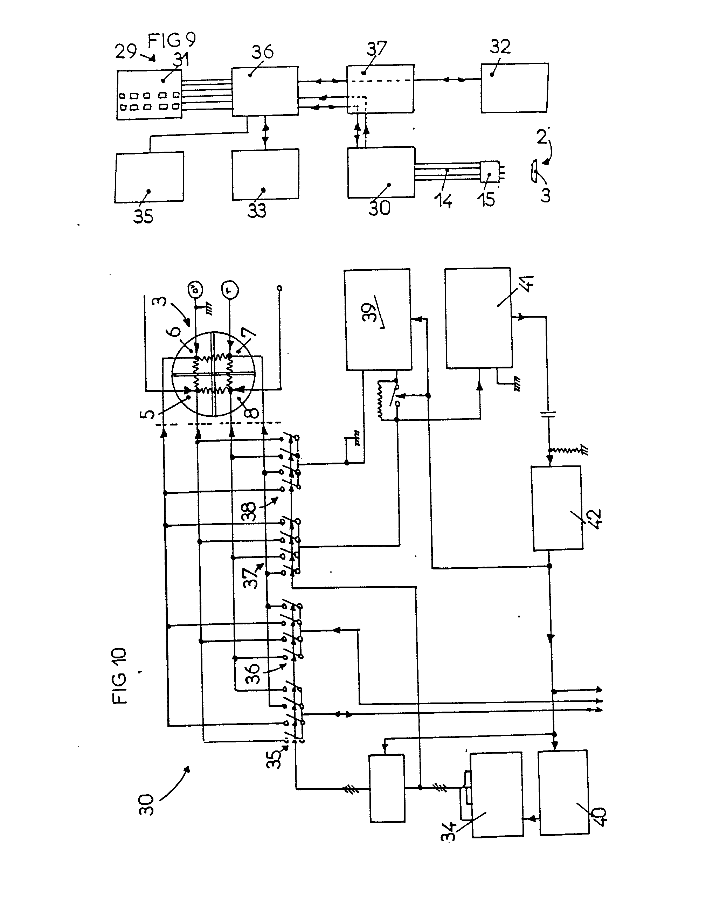

Chacune de ces pointes a la structure illustrée sur les figures 6 et 8, dans le cas particulier de la pointe 16. Cette dernière comporte une broche métallique 20, possédant une extrémité 21 pointue. Cette broche 20 peut coulisser à l'intérieur du palpeur 15, à l'encontre d'un ressort de compression 22, qui tend à la repousser vers l'extérieur.

Suivant un mode de réalisation préféré de l'invention, chaque ressort 22, et sa broche coulissante 20, est logé à l'intérieur d'une douille 23. Toutes les douilles 23 sont fixées dans un couvercle 24, qu'un ressort à lames 25 relie au corps du palpeur 15. Ce ressort 25 est susceptible de cloquer lorsqu'on presse vers le bas (flèche 26), un bouton central 27, solidaire du couvercle 24.

Par ailleurs, le nez du palpeur 15 comporte, sur sa périphérie, une couronne dentée 28, susceptible de venir s'adapter dans la denture de la couronne 12 dont le profil est complémentaire.

Dans l'exemple illustré, on a supposé que les pointes sont au nombre de quatre, si bien que le câble souple 14 comporte également quatre fils. Il est relié, comme illustré sur la figure 9, à un appareillage électronique logé dans le coffret 13. Cet appareillage comprend:

— d'une part un micro-processeur 29 (figure 9);

— d'autre part un circuit de connexion automatique 30 (figure 10).

Le micro-processeur 29 est obtenu par assemblage d'un clavier de commande 31, d'un afficheur de visualisation 32, et d'une mémoire de sauvegarde 33. L'ensemble est complété par la connexion automatique 30, une sortie UART 35, un circuit intégré 36, et un interfaces 37.

Le circuit de connexion automatique 30 comporte un compteur à quatre positions 34, qui commande quatre interrupteurs quadruples 35, 36, 37, 38, qui peuvent être transistorisés ou à relais. L'alimentation programmable 39 est à bas niveau et à impédance de sortie adaptée pour la recherche d'impédance. On assure ainsi une protection pour ne pas dépasser les tensions inverses définies par le circuit de mémoire. Les lignes de la mémoire sont pilotées les unes après les autres, au rythme d'une horloge de scrutation 40 dont est pourvu le compteur 34. Quand l'impédance unique recherchée apparaît, la sortie du comparateur à fenêtre 41 déclenche un monostable 42 qui bloque le compteur 34, et valide les branchements des lignes. Il court-circuite aussi l'impédance de l'alimentation programmable 39, programme l'alimentation à une valeur nécessaire pour faire fonctionner la mémoire 3, et indique au micro-processeur, qua la connexion est faite, si bien qu'il peut désormais dialoguer avec la mémoire 3. La durée du crèneu de sortie du monostable 42 couvrira le temps nécessaire pour l'échange entre l'appareil du coffret 15, et la mémoire 3.

le fonctionnement est le suivant:

Lorsque l'opérateur s'approche de l'animal, il lui suffit de présenter le palpeur 15 et de l'appuyer contre la pastille 2 à mémoire 3. Dans le premier temps de cette opération les dents de la courrone mâle 28 s'engagent dans les dents de la couronne femelle 12 (figure 5). Cela positionne angulairement, à une dent près, le palpeur 15 par rapport à la pastille 2 portant la mémoire 3. Ainsi, on est certain qu'aucune des pointes du palpeur 15 ne tombera en face des joints isolants 9.

En poursuivant l'enfoncement par le bouton 27, l'opérateur provoque l'abaissement des pointes 16, 17, 18, 19, dont les extrémités 21 perforent la membrane soupie 10 (figure 8). A la fin de ce mouvement, les ressorts 22 se trouvent comprimés, ce qui garantit la qualité du contact électrique entre chacune des pointes 16 à 19 et les secteurs conducteurs correspondants 5, 6, 7, 8.

Aussitôt, la séquence programmée se déroule en deux phases.

Pendant la phase préliminaire, le circuit de connexion automatique 30 fonctionne à la manière ci-dessus décrite (figures 9 et 10), pour définir laquelle des pointes 16, 17, 18, 19 est reliée à chacun des secteurs conducteurs 5, 6, 7, 8. Une fois terminée cette phase préliminaire, la phase opératoire proprement dite se déroule à l'aide du dispositif illustré sur la figure 9. Cela permet de lire et d'écrire dans la mémoire 3, de visualiser les informations, par exemple par affichage, de stocker en mémoire un ensemble d'opérations, ou de réaliser automatiquement toutes autres manipulations.

L'ensemble du cycle se déroule en un temps très court, par exemple une fraction de seconde. Aussitôt après il suffit à l'opérateur de retirer le palpeur 15, et de laisser libre l'animal exploré.

**Revendications**

1. Dispositif de connexion automatique rapide comprenant d'une part une face de contact, d'autre part, un palpeur, la face de contact (4) comportant plusieurs zones conductrices (5, 6, 7, 8), isolées les unes par rapport aux autres, tandis que le palpeur (15) comporte des pointes (16, 17, 18, 19), en matière conductrice, qu'il suffit d'appliquer contre les zones conductrices de la face de contact (4), caractérisé en ce que la face de contact (4) est équipée de moyens destinés à assurer automatiquement le positionnement angulaire du palpeur (15) lorsqu'on l'y applique, et en ce que les zones conductrices (5, 6, 7, 8) de la face de contact (4) sont réparties en cercle ou en secteurs circulaires autour d'un axe géométrique central, tandis que les moyens de positionnement angulaire sont constitués par une couronne (12), munie d'une denture sur laquelle commence à venir s'encastrer une denture complémentaire (28) prévue sur le palpeur (15), et ceci avant que les pointes (16 à 19) du palpeur (15) ne viennent s'appliquer sur les zones conductrices de la face de contact, si bien que l'orientation angulaire du palpeur (15) par rapport à la face de contact (4) est définie seulement à une dent près, ce qui peut s'effectuer automatiquement sans que l'utilisateur ait à tâtonner plus ou moins longtemps.

2. Dispositif suivant la revendication 1, caractérisé en ce que les pointes du palpeur (15) sont des pointes métalliques à structure télescopique, que des moyens de rappel élastique tendent à rappeler vers l'extérieur, si bien que lorsqu'on applique le palpeur (15) sur la face de contact (4), les pointes (16 à 19) ont tendance à se rentrer à l'encontre des moyens de rappel.

3. Dispositif suivant la revendication 1 ou 2, caractérisé en ce que les dentes des couronnes mâles (28) et femelles (12) ont une entrée en biseau, du fait de la forme tronconique des couronnes dentées.

4. Dispositif suivant l'une quelconque des revendications précédentes, caractérisé en ce que les zones conductrices de la face de contact (4) sont revêtues par une membrane (10) d'un matériau isolant souple et perforable, qui assure leur protection, tandis que les pointes (16 à 19) du palpeur (15) sont suffisamment pointues pour percer cette membrane (10) à chaque opération.

5. Dispositif suivant l'une quelconque des revendications précédentes, caractérisé en ce que les zones conductrices (5, 6, 7, 8) de la face de contact (4) sont reliées à une mémoire (3) avec laquelle elles sont enrobées dans un support isolant (11).

6. Dispositif suivant la revendication 5, caractérisé en ce que les pointes en matière conductrice du palpeur sont reliées à un appareil (13) comportant des circuits électroniques adaptés pour que, aussitôt après la mise en contact des pointes (16 à 19), avec les zones conductrices de la face de contact (4), se déroule une première séquence pendant laquelle un circuit (30) de mesure d'impédance à bas niveau assure l'exploration des différentes zones conductrices (5, 6, 7, 8) pour définir à laquelle des pointes du palpeur (15) chacune d'elles est reliée, alors qu'aussitôt après cette phase préliminaire, se déroule la séquence opératoire proprement dite, qui lit, explore, ou modifie le contenu de la mémoire (3).

7. Dispositif suivant l'une quelconque des revendications 4 à 6, caractérisé en ce que la pellicule isolante souple (10) protégeant les zones conductrices de la face de contact est réalisée en un matériau synthétique auto-cicatrisant, c'est à dire qu'après chaque perforation paru une pointe du palpeur (5), la pellicule se referme sur elle-même de façon étanche, dès que le palpeur (15) a été éloigné.

## Patentansprüche

1. Anordnung zur schnellen automatischen Verbindung, bestehend einerseits aus einer Kontaktfläche and andererseits aus einem Fühler, wobei die Kontaktfläche (4) mehrere voneinander isolierte leitende Bereiche (5, 6, 7, 8,) aufweist und der Fühler (15) Spitzen (16, 17, 18, 19) aus leitendem Material besitzt, die lediglich an die leitenden Bereiche der Kontaktfläche (4) anzudrücken sind, dadurch gekennzeichnet, daß die Kontaktfläche (4) mit Einrichtungen versehen ist, die automatisch die Winkelpositionierung des Fühlers (15) gewährleisten, wenn dieser angedrückt wird, und daß die leitenden Bereiche (5, 6, 7, 8) der Kontaktfläche (4) im Kreis oder in Kreissektoren um eine geometrische Mittelachse herum verteilt angeordnet sind, während die Einrichtungen zur Winkelpositionierung aus einem mit einer Zahnung versehenen Kranz (12) bestehen, in den eine an dem Fühler (15) vorgesehene ergänzende Zahnung (28) einzutreten beginnt, bevor die Spitzen (16 bis 19) des Fühlers (15) an die leitenden Bereiche der Kontaktfläche angesetzt werden, so daß die Winkelausrichtung des Fühlers (15) bezüglich der Kontaktfläche (4) nur auf einen Zahn genau definiert ist, was automatisch stattfinden kann, ohne daß der Benutzer längere Zeit herumprobieren muß.

2. Anordnung nach Anspruch 1, dadurch gekennzeichnet, daß die Spitzen des Fühlers (15) Metallspitzen mit teleskopartigem Aufbau sind, wobei elastische Rückholeinrichtungen bestrebt sind, diese nach außen zurückzuholen, so daß die Spitzen (16 bis 19) bei Andrücken des Fühlers (15) an die Kontaktfläche (14) entgegen der Wirkung der Rückholeinrichtungen nach innen treten.

3. Anordnung nach Anspruch 1 oder 2, dadurch gekennzeichnet, daß die Zähne der beiden Kränze (28 und 12) aufgrund der Kegelstumpfform der Zahnkränze einen abgeschrägten Eingang aufweisen.

4. Anordnung nach einem der vorhergehenden Ansprüche, dadurch gekennzeichnet, daß die leitenden Bereiche der Kontaktfläche (4) mit einer Membran (10) aus einem isolierenden, elastischen und perforierbarem Material bedeckt sind, die zu deren Schutz dient, während die Spitzen (16 bis 19) des Fühlers (15) spritz genug sind, um diese Membran (10) bei jeder Operation durchstechen zu können.

5. Anordnung nach einem der vorhergehenden Ansprüche, dadurch gekennzeichnet, daß die leitenden Bereiche (5, 6, 7, 8) der Kontaktfläche (4) mit einem Speicher (3) verbunden sind, mit dem zusammen sie in einem isolierenden Träger (11) eingebettet sind.

6. Anordnung nach Anspruch 5, dadurch gekennzeichnet, daß die Spitzen des Fühlers aus leitendem Material mit einer Vorrichtung (13) verbunden sind, die elektronische Schaltungen enthält, die bewirken, daß, sobald die Spitzen (16 bis 19) mit den leitenden Bereichen der Kontaktfläche (4) in Kontakt sind, eine erste Sequenz abläuft, während der eine Impedanzmeßschaltung (30) mit Niederspannung die einzelnen leitenden Bereiche (5, 6, 7, 8) abtastet und bestimmt, mit welcher Spitze des Fühlers (15) mit jeder von ihnen verbunden ist, wobei unmittelbar auf diese Vorphase die eigentliche Operationssequenz abläuft, in der der Speicher (3) abgelesen, abgefragt oder sein Inhalt geändert wird.

7. Anordnung nach einem der Ansprüche 4 bis 6, dadurch gekennzeichnet, daß die die leitenden Bereiche der Kontaktfläche schützende, elastische und isolierende Membran (10) aus einem sich selbst schließende Kunststoff besteht, d.h. daß sich die Membran nach jeder Perforierung durch eine Spitze des Fühlers (15) sich wieder dicht schließt, sobald der Fühler (15) entfernt wurde.

**Claims**

1. Automatic quick connecting device, comprising on the one hand, a contact face and on the other hand a sensor, the contact face (4) comprising a plurality of conductive zones (5, 6, 7, 8) isolated from one another, whilst the sensor (15) has pins (16, 17, 18, 19) consisting of conductive material which have only to be applied to the conductive zones of the contact face (4), characterised in that the contact face (4), is provided with means for ensuring automatic angular positioning of the sensor (15) when it is applied to it, and the conductive zones (5, 6, 7, 8) of the contact face (4) are distributed in a circle or in sectors of a circle about a central geometric axis, whilst the angular positioning means consist of a crown (12) provided with teeth, with which complementary teeth (28) provided on the sensor (15) begin to engage before the pins (16 to 19) of the sensor (14) come to abut on the conducting zones of the contact face, with the result that the angular orientation of the sensor (15) relative to the contact face (4) is defined merely to within one tooth, which can be effected automatically without the user having to fumble for very long.

2. Device according to claim 1, characterised in that the pins of the sensor (15) are metal pins of telescopic structure, which tend to be returned outwardly by resilient return means, so that when the sensor (15) is applied to the contact face (4), the pins (16 to 19) tend to retract against the return means.

3. Device according to claim 1 or 2, characterised in that the teeth of the male (28) and female crowns (12) have a bevelled entrance, on account of the truncated cone shape of the toothed crowns.

4. Device according to any one of the preceding claims characterised in that the conductive zones of the contact face (4) are covered with a membrane (10) of a flexible and perforatable insulating material which protects them, while the pins (16 to 19) of the sensor (15) are sufficiently sharp to pierce this membrane (10) on each occasion of use.

5. Device according to any one of the preceding claims, characterised in that the conductive zones (5, 6, 7, 8) of the contact face (4) are connected to a memory (3), together with which they are enveloped in an insulating support (11).

6. Device according to claim 5, characterised in that the pins of conductive material of the sensor are connected to an apparatus (13) comprising electronic circuits adapted so that, as soon as the pins (16 to 19) make contact with the conductive zones of the contact face (4), a first sequence takes place during which a low impedance measuring circuit (30) effects exploration of the different conductive zones (5, 6, 7, 8) in order to define to which of the pins of the sensor (15) each is connected, whilst immediately after this preliminary phase the operating sequence itself takes place, which reads, explores or modifies the contents of the memory (3).

7. Device according to any one of claims 4 to 6, characterised in that the flexible insulating membrane (10) protecting the conductive zones of the contact face is made from a synthetic, self-sealing material, i.e. each time it is perforated by a pin of the sensor (5), the film closes up again in an impervious manner as soon as the sensor (15) has been removed.

FIG 1

FIG 2

FIG 3

FIG 4

FIG5

FIG 7

FIG 6

FIG 8

FIG 9

FIG 10